Europäisches Patentamt

European Patent Office

Office européen des brevets

(11) Publication number: **0 246 742**

**A1**

(12) **EUROPEAN PATENT APPLICATION**

(21) Application number: **87302699.1**

(22) Date of filing: **27.03.87**

(51) Int. Cl.4: **H02K 37/22 , F16F 15/12 , G11B 5/54**

(30) Priority: **19.05.86 IT 6741086**

(43) Date of publication of application:
**25.11.87 Bulletin 87/48**

(84) Designated Contracting States:
**DE FR GB**

(71) Applicant: **Ing. C. Olivetti & C., S.p.a.**
**Via G. Jervis 77**
**I-10015 Ivrea(IT)**

(72) Inventor: **Oberto, Massimo**
**Via Belvedere**
**I-10011 Aglié (To)(IT)**

(74) Representative: **Pears, David Ashley et al**
**REDDIE & GROSE 16 Theobalds Road**
**London WC1X 8PL(GB)**

(54) **Device for damping the oscillations of a stepping motor.**

(57) The device comprises an external inertia element (14) which is fixed to a damping member (16) which is coaxially fixed with respect to a shaft (12) of a stepping motor (13), in such a way that it can rotate together therewith. The external inertia element (14) comprises a metal mass in the form of an annulus of limited thickness. The damping member (16) comprises a first circular flange (17) to which the annulus (14) is fixed, a second circular flange (19) by means of which the device is fixed to the shaft (12), and an annulus (18) of elastomeric material connecting the two flanges. The materials and the dimensions of the device can be calculated, proportioned and pre-arranged in such a way that the device is compact but can stop oscillations of the stepping motor (13) in a very short time. The device is particularly suited to damping the oscillations of a stepping motor which is used for example for positioning a printing member with respect to a print point or for positioning a recording head with respect to a magnetic disc.

## DEVICE FOR DAMPING THE OSCILLATIONS OF A STEPPING MOTOR

The present invention relates to a device for damping the oscillations of a stepping motor, which may be used for example for positioning a printing member with respect to a print point in a printing machine or typewriter or for positioning one or more recording heads with respect to a magnetic disc.

The device comprises an external inertia element fixed to a damping member which is fixed with respect to the shaft of the stepping motor.

For the purposes of damping the oscillations that the shaft of a stepping motor tends to have around the angular position which is reached after a rotary movement of greater or lesser amplitude, a device is known which comprises a cylindrical container having an annular cavity filled with lubricant and within which there is rotatably mounted a metal annular member which can rotate freely due to inertia within the container. That damping device of known type, while being effective, suffers nonetheless from the disadvantage of requiring suitable expensive mounting elements which are interposed between the container and the shaft in order to prevent the lubricant which consists of oil from escaping from the container.

The aim of the present invention is therefore to provide a device for damping the oscillations of the shaft of a stepping motor, which is simple, functional, inexpensive and easy to fit.

In accordance with that aim, and overcoming the disadvantage of the known device, the device according to the invention is characterised in that the external inertia element comprises annular inertial mass and the damping member comprises a flange by means of which the device is fixed to the shaft of the stepping motor and an element of elastomeric material which is fixed between the flange and the inertial mass.

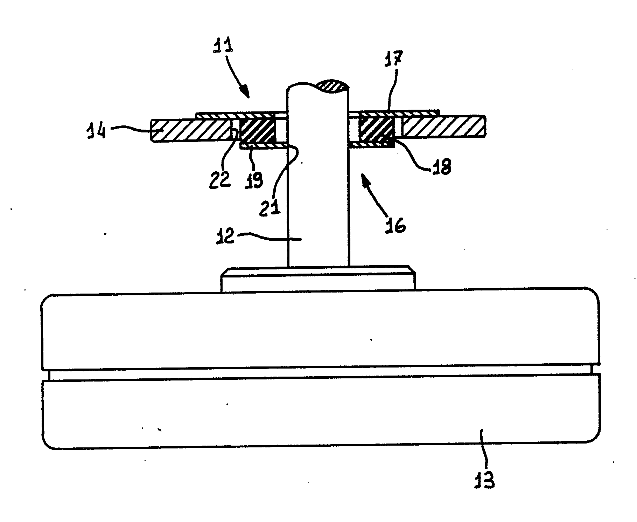

These and other features of the device according to the invention will be more clearly apparent from the following description of a preferred embodiment which is given by way of non-limiting example with reference to the accompanying drawing showing a partly sectional longitudinal view on an enlarged scale of the device according to the invention.

Referring to the drawing, a device for damping oscillations, according to the invention, is generally identified by reference numeral 11 and is applied to a shaft 12 of a stepping motor 13. The stepping motor 13 is a conventional stepping motor of the type involving a power supply at 5 volts, 0.5 ampere, at a frequency of 250 Hertz, with a maximum torque of 620 grams per centimetre and with an elementary step of 0.45°, such a motor being known per se and not described in detail and in the drawing. The device 11 comprises an external inertia element 14 and a damping member 16.

. The external inertia element 14 comprises an inertial mass of metal material in the form substantially of an annulus of limited thickness. The damping member comprises a first circular flange 17 to which the annulus 14 is fixed for example by means of spot welding, an element 18 of elastomeric material in the form of an annular portion and a second circular flange 19 having a hole 21 by means of which the device 11 is fixed in any known manner to the shaft 12 of the stepping motor 13, thus making fitting of the device 11 to the shaft 12 a very simple matter.

The annulus 14 has a central hole 22 which accommodates with clearance the annular portion 18, which is fixed between the first flange 17 and the second flange 19. As can be clearly seen from the drawing, the annulus 14, the first flange 17, the annular portion 18 and the second flange 19 are parallel and coaxial with each other and also coaxial with respect to the shaft 12. The first flange 17 and the second flange 19 are each formed by a thin metal plate.

. The materials and the dimensions of the annulus 14 and the damping member 16 have been calculated, proportioned and pre-arranged in such a way that the dimensions of the device 11 are greatly reduced; the device is compact. Nevertheless, the device can suppress oscillations of the stepping motor in a very short time. In particular the annulus 14, the first circular flange 17 and the second circular flange 19 are of metal material while the annular portion 18 is of commercial bromobutyl rubber with a hardness of 30 Shore A.

The annulus 14 may have an outside diameter of around 27.5 mm, with the hole 22 of a diameter around 14 mm, and a thickness of around 1.5 mm. The outside diameter of the first flange 17 may be about 20 mm, with an inside diameter of 7 mm and a thickness of around 2 tenths of a millimetre. The second flange 19 may have an outside diameter of about 12.5 mm with an inside diameter of about 2.5 mm and a thickness of about 2 tenths of a millimetre. The annular portion 18 may have an outside diameter of about 12.5 mm with an inside diameter of about 7 mm and a thickness of about 2 mm. The annular portion 18 is produced by means of vulcanisation, the first flange 17 and the second flange 19 being thereby bonded to the forces thereof to produce a single component.

The device 11 has been designed and calculated in such a way that, with the above-described dimensions, it is capable of damping the oscillations of the motor 13 which are at around 250 Hertz in 15 milliseconds, while without the device 11, they require about 300 milliseconds.

The mode of operation of the device 11 as described hereinbefore is as follows:

During the rotary movement of the shaft 12, for example for positioning a printing member with respect to a print point or for positioning one or more recording heads with respect to a magnetic disc, in any known manner which is not described and illustrated in the drawings, the device 11 which is fixed to the shaft 12 is also caused to rotate. When the shaft 12 reaches the predetermined angular position after a rotary movement of greater or lesser amplitude, it is stopped, with a tendency to oscillate about the position reached. The device 11 effectively damps the oscillations at a very high frequency which the shaft 12 tends to perform. around the position reached and caused by the typical magnetic structure of the stepping motor 13.

It will be apparent that both when at rest and also during operation thereof, the device 11 according to the invention does not suffer from any disadvantages.

Among possible modifications, the inertial mass and the element of elastomeric material may be of a different form from that described and in particular they may be subdivided into sectors or lamination layers, with equivalent inertial and damping functions respectively.

## Claims

1. A device for damping the oscillations of a stepping motor, comprising an external inertia element (14) which is fixed to a damping member (16) which is fixed with respect to the shaft (12) of the stepping motor (13), characterised in that the inertia element (16) comprises an annular inertial mass (14) and the damping member (16) comprises a first circular flange (19) by means of which the device is fixed to the shaft (12) of the stepping motor and an element (18) of elastomeric material which is fixed between the flange (19) and the inertial mass (14).

2. A device according to claim 1, characterised by a second flange (17) to which the inertial mass (14) is fixed and in that this mass comprises a metal mass of limited thickness.

3. A device according to claim 2, characterised in that each of the flanges (17,19) comprises a thin metal plate.

4. A device according to claim 2 or 3, characterised in that the annular inertial mass (14) comprises a plurality of separate sectors.

5. A device according to any of claims 1 to 4, characterised in that the elastomeric element (18) is of a substantially annular form.

6. A device according to any preceding claims, characterised in that the elastomeric element (18) comprises a mass of bromobutyl rubber of limited thickness.

7. A device according to any of the preceding claims, characterised in that the materials and the dimensions of the external inertia element (14) and the damping member (16) have been calculated, proportioned and pre-arranged in such a way that the device is compact and damps the oscillations of the stepping motor (13) in a very short time.

8. A device according to claim 7, characterised in that the external inertia element (14) and the damping member (16) are capable of damping the oscillations caused by the typical magnetic structure of stepping motors.

9. Use of a device according to any of claims 1 to 8 to damp the oscillations of a stepping motor which is used for positioning a printing member with respect to a print point or for positioning one or more recording heads with respect to a magnetic disc.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 128 650 (FRANGESH)<br><br>* Page 5, line 23 - page 6, line 4 * | 1-3,5-9 | H 02 K 37/22<br>F 16 F 15/12<br>G 11 B 5/54 |
| X | PATENT ABSTRACTS OF JAPAN, vol. 10, no. 150 (E-408)[2207], 31st May 1986; & JP-A-61 9156 (SHIATSUKU ENGINEERING K.K.) 16-01-1986<br>* Whole document * | 1,7-9 | |
| A | US-A-2 380 770 (McFARLAND)<br>* Page 1, right-hand column, lines 31-40; figure 1 * | 1-3,5 | |
| A | FR-A-1 402 730 (DAIMLER-BENZ)<br>* Page 2, lines 20-30 * | 1-3,5 | **TECHNICAL FIELDS SEARCHED (Int. Cl.4)** |
| A | PATENT ABSTRACTS OF JAPAN, vol. 7, no. 269 (M-259)[1414], 30th November 1983; & JP-A-58 146 745 (ENU OO KEE MEGURASUTEITSUKU K.K.) 01-09-1983<br>* Paragrah 2, lines 4-6 * | 4 | H 02 K<br>F 16 F |

The present search report has been drawn up for all claims

| Place of search | Date of completion of the search | Examiner |
|---|---|---|
| THE HAGUE | 19-08-1987 | STEINMETZ L.J.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82